# EUROPEAN PATENT APPLICATION

(11) **EP 3 689 787 A1**
(43) Date of publication of application: **05.08.2020**
(21) Application number: 18860087.8
(22) Date of filing: 29.09.2018
(51) Int. Cl.: B65G 1/04, B65G 1/137

(54) **WORKBIN STORAGE AND PICKING SYSTEM, AND STORAGE AND ALLOCATION INTEGRATED SYSTEM**

(30) Priority: 30.09.2017 CN 201710917204
(71) Applicant: Bluesword Intelligent Technology Co., Ltd., High-Tech Zone Jinan City, Shandong 250000 (CN)
(72) Inventor: WU, Yaohua, Jinan City Shandong 250000 (CN); ZHANG, Xiaoyi, Jinan City Shandong 250000 (CN); JIANG, Xia, Jinan City Shandong 250000 (CN); ZHANG, Yigong, Jinan City Shandong 250000 (CN)
(74) Representative: Becker, Eberhard
(86) International application number: PCT/CN2018/108713
(87) International publication number: WO 2019/062934

(57) **Abstract**

A material box storage and picking system and a storage and allocation integrated system. The material box storage and picking system includes a material box storage module (100), a batch-of-orders sorting module (200), an order box goods collection cache module (300), an order box allocation module (400) and a warehouse management module (500). The material box storage module (100) is configured to store material boxes, and the material boxes are configured to store goods. The batch-of-orders sorting module (200) is configured to perform parallel sorting of a batch of orders, so as to sort goods from the material boxes into order boxes. The order box goods collection cache module (300) is configured to cache and transfer the order boxes. The order box allocation module (400) is configured to receive the order boxes cached and transferred by the order box goods collection cache module (300) and to allocate the order boxes according to information of the user orders, so as to complete goods sorting for the batch of orders.

## Description

### CROSS-REFERENCE TO RELATED APPLICATION

This application claims priority benefit of China application serial No. 2017109172045, filed on September 30, 2017 and entitled "Material Box Storage and Sorting System, and Storage and Allocation Integrated System", which is incorporated herein by reference in its entirety.

### BACKGROUND

### Technical Field

This application relates to the technical field of intelligent sorting, in particular to a material box storage and picking system, and a storage and allocation integrated system.

### Description of Related Art

With the rapid development of E-commerce and relating industries, users have put forward higher and higher requirements for the storage and sorting efficiency of material boxes. However, traditional sorting methods have the following problems.
1. Many shelf-type material box storage and sorting systems still adopt a serial order sorting method which adopts a warehouse management system to process order information piece by piece, and sorting of the next order cannot be performed only if sorting of the current order is completed. Such sorting method has the drawbacks that material boxes to be sorted have to be delivered into and out of shelves frequently, which increases the workload of a shelf storage device and restricts the order sorting efficiency. 2. Many material box storage and sorting systems still adopt a conveyor-line cache method in the order box cache procedure, such cache method has a low order box storage density and cannot sort the order boxes, and the order boxes cannot be supplied to the next procedure as required.

An effective solution to the problem of low sorting efficiency of the above-mentioned warehouse technologies is not available yet at present.

### SUMMARY

In view of this, the objective of this application is to provide a material box storage and picking system and a storage and allocation integrated system, which can fulfill batch sorting, increase the cache capacity and improve the sorting efficiency.

In the first aspect, an embodiment of this application provides a material box storage and picking system which comprises a material box storage module, a batch-of-orders sorting module, an order box goods collection cache module, an order box allocation module and a warehouse management module. The material box storage module is configured to store material boxes, and the material boxes are configured to store goods. The batch-of-orders sorting module is configured to perform parallel sorting of a batch of orders, so as to sort goods corresponding to the same batch of orders into different order boxes from the material boxes by type, and the batch of orders consists of a plurality of user orders. The order box goods collection cache module is used to cache and transfer the order boxes. The order box allocation module is configured to receive the order boxes cached and transferred by the order box goods collection cache module and to allocate the order boxes according to information of the user orders, so as to complete goods sorting for the batch of orders. The warehouse management module is configured to receive and process the batch of orders sent from an order system, to deploy the material box storage module to deliver or store the material boxes, to deploy the batch-of-orders sorting module to perform sorting, to deploy the order box goods collection cache module to cache and transfer the order boxes, and to deploy the order box allocation module to allocate the order boxes.

On the basis of the first aspect, an embodiment of this application provides a first feasible implementation of the material box storage and picking system. Particularly, the material box storage and picking system further comprises an order box integration module. The order box integration module is arranged between the batch-of-orders sorting module and the order box goods collection cache module and is used to integrate order boxes corresponding to the same batch of orders and to convey the integrated order boxes to the order box goods collection cache module.

In one optional embodiment of this application, the order box goods collection cache module comprises at least one modular cache unit which includes at least one set of order box storage shelves, at least one lifting machine, at least one shuttle vehicle and at least one power station.

In one optional embodiment of this application, the set of order box storage shelves is an intensive multi-layer shuttle vehicle shelf, and each shelf layer has a plurality of goods locations.

In one optional embodiment of this application, each shelf layer includes a rail beam, a rear beam and a plurality of material box support rods arranged between the rail beam and the rear beam, wherein every two of the material box support rods define a goods compartment, and the goods compartments are configured to support the order boxes.

In one optional embodiment of this application, the shuttle vehicle is a single-goods-location shuttle vehicle.

In one optional embodiment of this application, an input terminal and an output terminal of the modular cache unit are connected to a conveyor line and a transfer machine.

In one optional embodiment of this application, the order box goods collection cache module further comprises a maintenance device, wherein the maintenance device corresponds to the at least one modular cache unit and is configured to maintain the modular cache unit.

In one optional embodiment of this application, the maintenance device comprises a multi-layer maintenance platform.

In one optional embodiment of this application, the order box goods collection cache module is configured to randomly receive and cache order boxes corresponding to multiple batches of orders and to output order boxes corresponding to the same batch of orders in a centralized manner as required.

In one optional embodiment of this application, the material box storage module comprises at least one modular storage unit which includes at least one material box storage sub-unit, wherein the material box storage sub-unit comprises at least one set of material box storage shelves, at least one lifting machine, at least one shuttle vehicle and at least one power station.

In one optional embodiment of this application, the set of material box storage shelves is an intensive multi-layer shuttle vehicle shelf, and each shelf layer has a plurality of goods locations.

In one optional embodiment of this application, the modular storage unit further comprises a code scanner which is configured to scan bar code information on side surfaces of the material boxes to realize entry of information of the material boxes.

In one optional embodiment of this application, the batch-of-orders sorting module comprises a plurality of sorting units, a conveyor line and a transfer machine and is configured to perform parallel sorting of a batch of orders, wherein the conveyor line is connected to the material box storage module and the order box goods collection cache module.

In one optional embodiment of this application, each of the sorting units comprises a plurality of sorting stations, each of the sorting stations comprises a man-machine operation device, a cache shelf, a conveyor line and a transfer machine, and the cache shelf comprises a shelf and order boxes disposed on the shelf.

In one optional embodiment of this application, the order box allocation module comprises a conveyor line, a transfer machine, an allocation platform, a cache shelf and a man-machine operation device. The conveyor line is connected to the order box goods collection cache module, and the cache shelf comprises a shelf and user boxes disposed of on the shelf.

In one optional embodiment of this application, the warehouse management module is configured to classify multiple orders in batches according to a preset classification rule, to calculate a quantity of the same type of to-be-sorted goods corresponding to the same batch of orders, to send a calculation result of the quantity and type of the to-be-sorted goods to the batch-of-orders sorting module and the material box storage module, to control the material box storage module to output material boxes according to a preset delivery rule, and to control the batch-of-orders sorting module to sort goods from the material boxes into the order boxes according to a preset sorting rule.

In one optional embodiment of this application, the warehouse management module is configured to control the order box goods collection cache module to output goods corresponding to the same batch of orders in a centralized manner according to a delivery rule by analyzing information of the order boxes stored on the shelves after the order boxes are controlled to enter the order box goods collection cache module according to a preset storage rule.

In the second aspect, this application provides a storage and allocation integrated system which comprises the material box storage and picking system, and a storage module, a whole-box delivery module and an empty box conveying module which are connected to the material box storage and picking system.

In one optional embodiment of this application, the storage module is connected to an external warehouse system or an external transporter, and the empty box conveying module is configured to supply empty boxes to the material box storage and picking system or to recycle empty boxes from the material box storage and picking system.

The embodiments of this application have the following beneficial effects.

According to the material box storage and picking system and the storage and allocation integrated system provided by the embodiments of this application, a batch-of-orders parallel sorting method is adopted to perform parallel sorting of the same batch of orders on multiple sorting stations, so that the sorting efficiency is improved. Compared with a conveyor-line cache method, the order box goods collection cache module has a higher storage capacity, so that more goods can be cached. More batch-of-orders sorting modules can be configured to guarantee parallel work of more sorting stations, so that the batch-of-orders sorting efficiency is improved. Compared with the conveyor-line cache method, the order box goods collection cache module can optimize the conveying sequence of cached order boxes, thus improving the order box supply efficiency of the allocation platform, and accordingly, improving the user order completion efficiency.

Other characteristics and advantages of this disclosure will be stated in the following description. Or, part of the characteristics and advantages of this disclosure can be inferred or undoubtedly learnt from the description or be acquired by implementing the aforementioned technique of this disclosure.

To make the aforesaid objective, characteristics and advantages of this disclosure clearer and easier to understand, preferred embodiments are elaborated below in combination with the accompanying drawings.

### BRIEF DESCRIPTION OF THE DRAWINGS

To explicitly explain the specific implementations of this application or the technical solutions of the prior art, the drawings required for description of the specific implementations or the prior art are brief introduced below. Clearly, the accompanying drawings in the following description only illustrate some implementations of this application, and those ordinarily skilled in the art can obtain other drawings according to the following ones without creative labor.
FIG. 1 is a structural block diagram of a material box storage and picking system in an embodiment of this application;
FIG. 2 is an overall structural diagram of the material box storage and picking system in the embodiment of this application;
FIG. 3 is an overall structural diagram of a material box storage and picking system in another embodiment of this application;
FIG. 4 is a structural diagram of an order box goods collection cache module in the embodiment of this application;
FIG. 5 is a plan view of an order box storage shelf of the order box goods collection cache module in the embodiment of this application;
FIG. 6 is a structural diagram of a power station of the order box goods collection cache module in the embodiment of this application; and
FIG. 7 is a structural diagram of a material box storage module in the embodiment of this application.

### DESCRIPTION OF THE EMBODIMENTS

To make the objective, technical solutions and advantages of the embodiments of this application clearer, the technical solutions of this application are explicitly and thoroughly described below in combination with the accompanying drawings. Clearly, the embodiments in the following description are only illustrative ones, and not all possible ones of this application. On the basis of these illustrative ones, all other embodiments obtained by those ordinarily skilled in the art without creative labor should also fall within the protection scope of the invention.

To overcome the defect of low sorting efficiency of exiting storage technologies, this application provides a material box storage and picking system and a storage and allocation integrated system which can fulfill batch sorting, increase the cache capacity and improve the sorting efficiency.

To facilitate the understanding of the embodiments of this application, the material box storage and picking system disclosed by the embodiments of this application is introduced in detail first.

### Embodiment 1

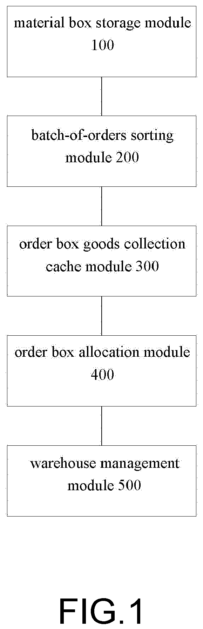

Embodiment 1 of this application provides a material box storage and picking system. Referring to FIG. 1 which shows a structural block diagram of the material box storage and picking system, the material box storage and picking system at least comprises a material box storage module 100, a batch-of-orders sorting module 200, an order box goods collection cache module 300, an order box allocation module 400, and a warehouse management module 500.

Particularly, the material box storage module 100 is configured to store material boxes, wherein the material boxes are configured to store goods. Herein, it should be noted that the material box storage module 100 satisfies the operating requirements of a shuttle vehicle, a power station, a lifting machine, a maintenance device and the like.

The batch-of-orders sorting module 200 is configured to perform parallel sorting of a batch of orders, so as to sort goods corresponding to the same batch of orders into different order boxes from the material boxes according to types and order contents. The batch of orders consists of a plurality of orders and may include different orders from multiple users or multiple orders from one user. Parallel sorting is performed on the orders in the batch of orders, that is, goods information contained in multiple orders is processed in advance to determine the types of to-be-sorted goods, the quantity of each type of goods, and the sorting sequence of different types of goods. For example, the total quantity of to-be-sorted goods of the same type is worked out so that all the goods of this type in the batch of orders can be sorted out in the delivery process to be placed into the order boxes. Or, the material boxes corresponding to the same batch of orders are discharged out of the material box storage module to be equitably distributed to different sorting stations according to the working condition of the sorting stations in the batch-of-orders sorting module, so as to perform sorting of the batch of orders. Or, to-be-sorted goods in this batch of orders are sorted to perform parallel sorting of multiple orders, so that compared with a traditional serial order sorting method, the sorting speed and the sorting efficiency of the batch-of-orders sorting module are improved.

The order box goods collection cache module 300 is configured to cache and transfer the order boxes. Compared with a conveyor-line cache method, the order box goods collection cache module of the material box storage and picking system has a higher storage capacity and can cache much more goods, so that more batch-of-orders sorting modules 200 can be configured to make sure that more sorting stations work in parallel, thus improving the sorting efficiency of the batch of orders.

Furthermore, the order box goods collection cache module 300 may be configured to randomly receive and cache order boxes corresponding of multiple batches of orders and to output order boxes corresponding to the same batch of orders in a centralized manner as required. Therefore, under the condition where order boxes corresponding to difference batches of orders enter the order box goods collection cache module, order boxes corresponding to the same batch of orders can be output in a centralized manner and are then supplied to the subsequent order box allocation module 400. Compared with a traditional method, the order box sorting procedure of an allocation conveyor line is omitted (order boxes of the same batch are output, so that sorting does not need to be performed anymore), so that the order box supply efficiency of an allocation platform is improved, and accordingly, the user order completion efficiency is improved.

The order box allocation module 400 is configured to receive the order boxes cached and transferred by the order box goods collection cache module and to allocate the order boxes according to information about the user orders, so as to complete goods sorting for the batch of orders.

The warehouse management module 500 is configured to receive and process the batch of orders sent from an order system, to deploy the material box storage module delivery or store the material boxes, to deploy the batch-of-orders sorting module to perform sorting, to deploy the order box goods collection cache module to cache and transfer the order boxes, and to deploy the order box allocation module to allocate the order boxes. Understandably, the warehouse management module 500 may has a function of monitoring and managing the material box storage and picking system. For example, the warehouse management module 500 can process the information about the batch of orders, deploy equipment to work, monitor the working condition of the equipment, manage the material boxes and goods information, and manage goods location allocation.

According to the material box storage and picking system in this embodiment of the application, a batch-of-orders parallel sorting is adopted to perform parallel sorting of the same batch of orders on multiple sorting stations, so that the sorting efficiency is greatly improved. The order box goods collection cache module which has a higher storage capacity than the conveyor-line cache method is configured, so that much more goods can be cached. More batch-of-orders sorting modules can be configured to guarantee that more sorting stations work in parallel, so that the sorting efficiency of the batch of orders is improved. Moreover, compared with the conveyor-line cache method, the order box goods collection cache module can optimize the conveying sequence of the order boxes and improve the order box supply efficiency of the allocation platform, thus improving the user order completion efficiency.

Because goods are sorted into the order boxes by the batch-of-orders sorting module, that is, the goods are conveyed through the order boxes, the material box storage and picking system may further comprise an order box integration module to further improve the cache capacity of the order box goods collection cache module, wherein the order box integration module is arranged between the batch-of-orders sorting module and the order box goods collection cache module and are configured to integrate order boxes corresponding to the same batch of orders and to convey the integrated order boxes to the order box goods collection cache module. In an actual application, there may be a case where there are only a few of goods in the order boxes, for example, there is a small quantity of a certain type of goods in one order, if the order boxes directly enter the order box goods collection cache module without being integrated, the cache capacity of the order box goods collection cache module will be wasted. The number of order boxes used for the same batch of orders can be reduced through order box integration. Understandably, the order box integration module can save box integration information during box integration and upload the box integration information to the warehouse management module to perform the subsequent allocation procedure.

The batch of orders is formed by dozens to hundreds of user orders according to a rule such as the delivery area and the order production time, and can be configured in a sorting procedure by the warehouse management system to be processed at the same time.

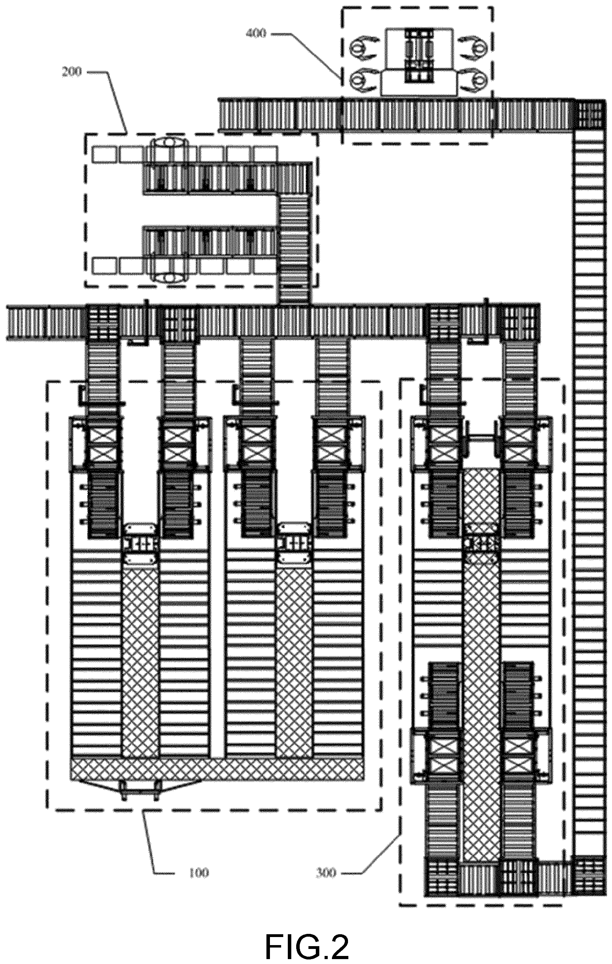

For the sake of a better understanding, FIG. 2 shows an overall structural diagram of the material box storage and picking system. As illustrated in FIG. 2, the material box storage module 100, the batch-of-orders sorting module 200, the order box goods collection cache module 300 and the order box allocation module 400 are sequentially connected through a conveyor line. The material box storage module 100 receives and stores goods supplied from the outside. When the batch-of-orders sorting module 200 receives an order task, a goods demand instruction is generated and is sent to the material box storage module 100, so that target goods stored in the material box storage module 100 are output to the batch-of-orders sorting module 200. The batch-of-orders sorting module 200 sorts the target goods corresponding to the orders into the order boxes, and remaining goods are stored (returned) in the material box storage module 100. The batch-of-orders sorting module 200 is connected to an input terminal of the order box goods collection cache module 300 through the conveyor line, and the order box goods collection cache module 300 performs goods collection cache of the order boxes. An output terminal of the order box goods collection cache module 300 is connected to the order box allocation module 400, and the order boxes corresponding to the batch of orders enter the order box goods collection cache module 300 and are then output to the order box allocation module 400 to be allocated to the orders by the order box allocation module 400.

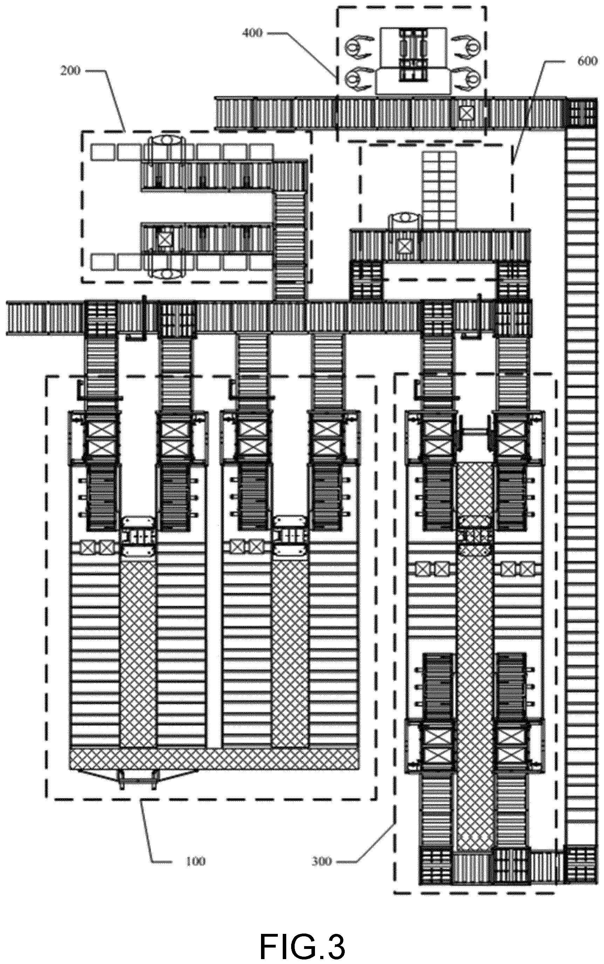

Referring to FIG. 3 which shows the overall structural diagram of another material box storage and picking system, the material box storage and picking system further comprises an order box integration module 600 on the basis of FIG. 2. The order box integration module 500 is arranged between the batch-of-orders sorting module 200 and the order box goods collection cache module 300. Order boxes corresponding to the same batch of orders are integrated by the order box integration module 500, so that the number of the order boxes is reduced, and the cache space is saved.

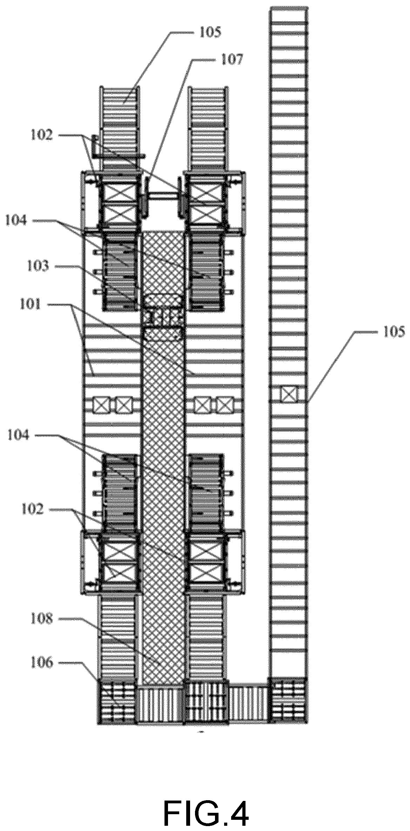

In one implementation, the order box goods collection cache module 300 comprises at least one modular cache module which includes at least one set of order box storage shelves, at least one lifting machine, at least one shuttle vehicle and at least one power station. The set of order box storage shelves is an intensive multi-layer shuttle vehicle shelf, and each shelf layer has a plurality of goods locations. Referring to FIG. 4 which shows a structural diagram of the order box goods collection cache module 300, the order box goods collection cache module comprises one modular cache unit in this figure, by way of example, and it can be understood that more modular cache units can be configured to enlarge the cache space. The modular cache unit comprises one set of order box storage shelves 101, four lifting machines 102, one shuttle vehicle 103 and four power stations 104, and an input terminal and an output terminal of the modular cache unit are connected to a conveyor line 105 and a transfer machine 106.

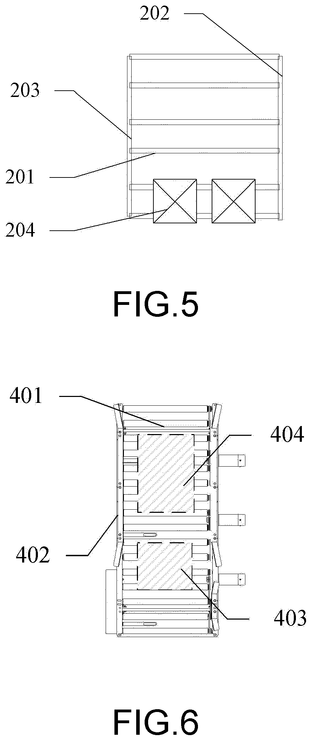

The set of order box storage shelves is an intensive multi-layer shuttle vehicle shelf. Referring to FIG. 5 which shows a plan view of one order box storage shelf of the order box goods collection cache module, the order box storage shelf shown in FIG. 5 includes a plurality of material box support rods 201, a rail beam 202 and a rear beam 203,. Every two material box support rods 201 define a goods compartment used for supporting order boxes 204. The shuttle vehicle travels on the rail beam 202 and operates in a roadways formed by the set of order box storage shelves which are parallel to one another. The rail beam 202 and the rear beam 203 are respectively arranged at two ends of the material box support rods 201. The plurality of material box support rods are arranged in parallel to form one shelf layer together with the rail beam and the rear beam.

In this embodiment, the order box storage shelves 101 are preferably dual-goods-location shelves, the shuttle vehicle 103 is a single-goods-location shuttle vehicle, and the dual-goods-location shelves are matched with the single-goods-location shuttle vehicle. The dual-goods-location shelves have a higher storage density in space than single-goods-location shelves. The single-goods-location shuttle vehicle occupies a narrower space than a dual-goods-location shuttle vehicle, thus improving the storage density. Particularly, the single-goods-location shuttle vehicle comprises a single-goods-location storage platform and a fork, wherein the fork is a bidirectional-stretching fork.

Particularly, the order box storage shelf 101 further comprises at least one column sheet (not shown) and includes a plurality of shelf layers, so that the vertical space can be fully used to store order boxes, and the cache capacity of the order box goods collection cache module is improved.

The order box goods collection cache module can cache and transfer order boxes sorted out by the batch-of-orders sorting module. Compared with the existing conveyor-line cache method, order box goods collection cache module has a higher storage capacity and can cache much more goods, so that more batch-of-orders sorting module can be configured to make sure that more sorting stations work in parallel, thus improving the sorting efficiency of the batch of orders. The order box goods collection cache module can randomly receive and cache order boxes corresponding to multiple batches of orders and can output order boxes corresponding to the same batch of orders in a centralized manner as required. Therefore, under the condition where order boxes corresponding to different batches of orders enter the cache box goods collection cache module, order boxes of the same batch of orders can be output in a centralized manner and are then supplied to the subsequent order box allocation module. Compared with a traditional method, the order box sorting procedure of an allocation conveyor line is omitted (order boxes of the same batch are supplied, so that sorting does not need to be performed anymore), the order box supply efficiency of the allocation platform is improved, and accordingly, the user order completion efficiency is improved.

The four lifting machines 102 shown in FIG. 4 include two storage lifting machines and two delivery lifting machines. The storage lifting machines and the delivery lifting machines are respectively arranged at two ends of the order box storage shelves 101 (namely the upper and the lower end shown in FIG. 4). The storage lifting machines are connected to the batch-of-orders sorting module 200 through the conveyor line 105, and the delivery lifting machines are connected to the order box allocation module 400 through the conveyor line 105 and the transfer machine 106.

Particularly, the power stations 104 are arranged at two ends of the dual-goods-location shelves. Referring to FIG. 6 which shows a structural diagram of the power station of the order box goods collection cache module and FIG. 4, the power station 104 is integrated with a transmission mechanism 401 and a support frame 402. The transmission mechanism 401 is connected to the shuttle vehicle 103 and the lifting machines 102 to perform goods transfer between the shuttle vehicle 103 and the lifting machines 102, and then goods are transferred to the conveyor line 105 by the lifting machines 102.

The transmission mechanism 401 includes at least two power sections which respectively correspond to a storage region and a cache region. As shown in FIG. 6, the power station 104 has a storage region 403 and a cache region 404. The power station can have a greater capacity to temporarily store goods through the configuration of the cache region 404. When goods are to be delivered, the shuttle vehicle 103 places the goods in the storage region 403, then the transmission mechanism 401 transfers the goods to the cache region 404, and at this moment, the storage region 403 can receive goods from the shuttle vehicle 103 again and does not need to wait until goods on the power stations 104 are transferred away by the lifting machines 102, so that the goods sorting efficiency of the shuttle vehicle 103 is improved. Similarly, when goods are to be stored, the power station can temporarily store the goods, so that the lifting efficiency of the lifting machines 102 is improved.

The transmission mechanism 401 may consist of a plurality of transmission rollers such as electric rollers. Considering that goods need to be transferred by the shuttle vehicle 103 in a direction perpendicular to the transmission rollers in the storage region 403, a frictional force between the transmission rollers and order boxes has to be decreased in the storage region 403 to make sure that the fork of the shuttle vehicle 103 can take or place the order boxes conveniently. The frictional force between the transmission rollers and the order boxes has to be increased in the cache region 404 to make sure that the order boxes can be better transferred. Therefore, the transmission rollers in the storage region 403 are smooth transmission rollers, and the transmission rollers in the cache region 404 are coarse transmission rollers.

The power station 104 further comprises a transition board which is configured to avoid the negative influence of a gap between the power station 104 and the shuttle vehicle 103 on the transfer process of the order boxes between the power station 104 and the shuttle vehicle 103, wherein the transition board is arranged on the side, connected to the shuttle vehicle 103, of the storage region 403, so that the order boxes can be transferred more smoothly, and the delivery and storage efficiency is guaranteed.

Furthermore, the order box goods collection cache module 300 further comprises a maintenance device. The maintenance device corresponds to at least one modular cache unit, is configured to maintain the modular cache unit, and comprises a multi-layer maintenance platform. A maintenance platform 108 and a maintenance lifting machine 107 are shown in FIG. 4, wherein equipment and personnel are lifted by the maintenance lifting machine 107 and then enter the roadway through the maintenance platform connected to the maintenance lifting machine 107. A maintenance footboard (not shown) is arranged in the roadway, and the maintenance lifting machine is connected to the maintenance footboard.

Furthermore, referring to FIG. 2, the material box storage module 100 comprises at least one modular storage unit which includes at least one material box storage sub-unit. The material box storage sub-unit comprises at least one set of material box storage shelves, at least one lifting machine, at least one shuttle vehicle and at least one power station. The set of material box storage shelves is an intensive multi-layer shuttle vehicle shelf, and each shelf layer has a plurality of goods locations. Referring to FIG. 7 which shows a structural diagram of the material box storage module, the material box storage module includes two modular storage units in this figure, by way of example. In actual use, more modular storage units can be flexibly configured to enlarge the cache space, and the two modular storage units correspond to a sorting facility. For example, the modular storage unit comprises one set of dual-goods-location material box storage shelves 801, two lifting machines 802, one shuttle vehicle 803 and two power stations 804, and an input terminal and an output terminal of the modular storage unit are connected to a conveyor line 805 and a transfer machine 806. Furthermore, the modular storage unit further comprises a code scanner 807 which is configured to scan bar code information on side surfaces of material boxes to realize entry of information about the material boxes. The structure of the material box storage module 100 is similar to that of the order box goods collection cache module 300 and can be understood with reference to FIG. 2, and relevant details will not be given anymore herein.

Continue referring to FIG. 2, particularly, the batch-of-orders sorting module 200 at least comprises a plurality of sorting units, a conveyor line and a transfer machine, and is configured to perform parallel sorting of a batch of orders. The conveyor line is connected to the material box storage module and the order box goods collection cache module. Each of the sorting units comprises a plurality of sorting stations. Each of the sorting stations at least comprises a man-machine operation device, a cache shelf, a conveyor line and a transfer machine. The cache shelf comprises a shelf and order boxes disposed of on the shelf.

Particularly, the order box allocation module 400 at least comprises a conveyor line, a transfer machine, an allocation platform, a cache shelf and a man-machine operation device. The conveyor line is connected to the order box goods collection cache module, and the cache shelf comprises a shelf and user boxes disposed on the shelf.

The warehouse management module 500 generates a box demand for order boxes at the allocation platform, the order box goods collection cache module 300 generates a delivery task according to the box demand to transfer the order boxes to the conveyor line, and finally, the order boxes reach the allocation platform. An allocation platform operator places goods in the order boxes into different user boxes on the cache shelves according to a computer prompt, so that sorting of user orders is completed.

In consideration of the storage, sorting, cache and allocation requirements, the warehouse management module 500 is configured to classify multiple batches of orders according to a preset classification rule, to calculate the quantity of the same type of to-be-sorted goods corresponding to the same batch of orders, to send a calculation result about the quantity and type of the to-be-sorted goods to the batch-of-orders sorting module 200 and the material box storage module 100, to control the material box storage module 100 to output material boxes according to a preset delivery rule, and to control the batch-of-orders sorting module 200 to sort goods from material boxes to the order boxes according to a preset sorting rule. For example, orders are classified in batches according to the attributes of the orders, such as the delivery area, the order production time, the emergency degree, and the types of goods in the orders. Furthermore, the warehouse management module is also configured to control the order box goods collection cache module to output goods corresponding to the same batch of orders in a centralized manner according to a delivery rule by analyzing information of order boxes stored on the shelves after the order boxes are controlled to enter the order box goods collection cache module according to a preset storage rule, so that the order boxes are cached and optimized in a centralized manner on a large scale (including quantity optimization and sequence optimization), and eventually, the goods corresponding to the batch of orders are rapidly allocated to user orders.

The material box storage and picking system in this embodiment of the application comprises the material box storage module and the order box goods collection cache module which adopt high-density intensive multi-layer shuttle vehicle shelves, so that high-density material box storage and goods collection cache of order boxes are realized. Multiple sorting stations work synchronously to perform parallel sorting of the same batch of orders, so that the sorting efficiency is greatly improved. Compared with a conveyor-line cache method, the order box goods collection cache module has a higher storage capacity and can be connected to more sorting modules to guarantee parallel working of more sorting stations, so that the sorting efficiency of the batch of orders is improved, and order boxes of the same batch can be output in a centralized manner under the condition where the different batches of order boxes are stored randomly. The order boxes of the same batch can be supplied to any allocation platform, so that the order box sorting procedure of a sorting conveyor line is omitted, the order box supply efficiency of the allocation platform is improved, and accordingly, the user order completion efficiency is improved.

### Embodiment 2

Embodiment 2 of this application provides a storage and allocation integrated system (not shown) which comprises the material box storage and allocation system provided in the first aspect or any one of the feasible implementations thereof, a storage module (not shown), a whole-box delivery module (not shown) and an empty box conveying module (not shown) which are connected to the material box storage and picking system. The storage module is connected to an external warehouse system or an external transporter, the whole-box delivery module is used for goods return or other purposes, and the empty box conveying module is configured to supply empty boxes to the material box storage and picking system or to recycle empty boxes from the material box storage and picking system. The empty box conveying module may comprise an empty box stacking facility and a conveyor line.

The storage and allocation integrated system in this embodiment of the application has the same technical characteristics as the material box storage and picking system in the above embodiment, and thus can solve the same technical problems and fulfill the same technical effects.

Moreover, unless otherwise explicitly stated and defined, the terms "install", "connect", and "connection" in the description of the embodiments of the application should be generally understood. For instance, "connection" may refer to fixed connection, detachable connection or integral connection, or mechanical connector or electrical connection, or direct connection or indirect connection with an inter-medium, or internal communication of two elements. Those ordinarily skilled in the art should appreciate the specific meanings of these terms in this application as the case may be.

It should be noted that the terms such as "central", "upper", "lower", "left", "right", "vertical", "horizontal", "inner" and "outer" in the description of this application are used to indicate positional or relational relations on the basis of the drawings for the purpose of facilitating and simplifying the description of this application, do not indicate or imply that the devices or elements referred to mush have specific directions or must be configured or operated in specific directions, and thus should not be interpreted as limitations of this application. In addition, the terms "first", "second", and "third" are only used for the purpose of description, and do not indicate or imply any relative importance.

Those skilled in the art can thoroughly understand the specific working process of the systems, devices and units mentioned above by referring to the corresponding process in the embodiments of the method, and for the purpose of a convenient and brief description, relevant details will no longer be given.

It should be noted that the systems, devices and methods disclosed in the several embodiments of this application can be implemented in other ways. The device embodiments described above are only illustrative ones. For instance, the units are partitioned merely according to logic functions, and when actually implemented, the units can also be partitioned in other ways. For example, multiple units or assemblies can be combined or integrated in another system, or certain characteristics can be neglected or not executed. Moreover, coupling or direct coupling or communication illustrated or discussed above may refer to indirect coupling or communication between devices or units via communication interfaces, or electrical or mechanical coupling or communication, or coupling or communication in other ways.

The units which are independently stated may be or may not be physically separated, and components which are shown as units may be or may not be physical units, that is, these components may be located at the same position or may be distributed in multiple network units. The part or all of these units can be selected as actually needed to fulfill the purpose of the embodiments.

In addition, all functional units in the embodiments of this application may be integrated in one processing unit or separated physically, or two or more units may be integrated in one unit.

Finally, it should be noted that the above embodiments of this application are only specific ones used to explain the technical solutions of this application, and are not intended to limit the technical solutions. The protection scope of this application is not limited to the above embodiments. Although this application has been expounded with reference to the aforesaid embodiments, those ordinarily skilled in the art would appreciate that any skilled in the art can make modifications or achievable alterations to the technical solutions recoded in the aforesaid embodiments or make equivalent substitutions to part of the technical characteristics within the technical scope disclosed by this application. All these modifications, alterations or substitutions obtained without making the corresponding technical solutions deviate from the spirit and scope of the technical solutions of this application should also fall within the protection scope of this application. Thus, the protection scope of this application should be subject to the protection scope of the claims.

### INDUSTRIAL APPLICABILITY

The material box storage and picking system and the storage and allocation integrated system provided by the embodiments of this application improve the sorting efficiency, and can cache more goods than a conveyor-line cache method, thus improving the sorting efficiency of batches of orders. Moreover, the conveying sequence of cached order boxes is optimized, the order box supply efficiency of the allocation platform is improved, and accordingly, the user order completion efficiency is improved.

## Claims

1. A material box storage and picking system, **characterized by** at least comprising a material box storage module, a batch-of-orders sorting module, an order box goods collection cache module, an order box allocation module and a warehouse management module, wherein:
the material box storage module is configured to store material boxes, and the material boxes are configured to store goods;
the batch-of-orders sorting module is configured to perform parallel sorting of a batch of orders, so as to sort goods corresponding to a same batch of orders into different order boxes from the material boxes by type, and the batch of orders consists of a plurality of user orders;
the order box goods collection cache module is configured to cache and transfer the order boxes;
the order box allocation module is used to receive the order boxes cached and transferred by the order box goods collection cache module and to allocate the order boxes according to information of the user orders, so as to complete goods sorting for the batch of orders; and
the warehouse management module is used to receive and process the batch of orders sent from an order system, to deploy the material box storage module to deliver or store the material boxes, to deploy the batch-of-orders sorting module to perform sorting, to deploy the order box goods collection cache module to cache and transfer the order boxes, and to deploy the order box allocation module to allocate the order boxes.

2. The material box storage and picking system according to claim 1, **characterized by** further comprising an order box integration module, wherein the order box integration module is arranged between the batch-of-orders sorting module and the order box goods collection cache module; and
the order box integration module is configured to integrate order boxes corresponding to the same batch of orders and to convey the integrated order boxes to the order box goods collection cache module.

3. The material box storage and picking system according to claim 1 or 2, **characterized in that** the order box goods collection cache module comprises at least one modular cache unit which includes at least one set of order box storage shelves, at least one lifting machine, at least one shuttle vehicle and at least one power station.

4. The material box storage and picking system according to claim 3, **characterized in that** the set of order box storage shelves is an intensive multi-layer shuttle vehicle shelf, and each shelf layer has a plurality of goods locations.

5. The material box storage and picking system according to claim 4, **characterized in that** each said shelf layer includes a rail beam, a rear beam and a plurality of material box support rods arranged between the rail beam and the rear beam, every two of the material box support rods define a goods compartment, and the goods compartments are configured to support the order boxes

6. The material box storage and picking system according to claim 3, **characterized in that** the shuttle vehicle is a single-goods-location shuttle vehicle.

7. The material box storage and picking system according to claim 3, **characterized in that** an input terminal and an output terminal of the modular cache unit are connected to a conveyor line and a transfer machine.

8. The material box storage and picking system according to claim 3, **characterized in that** the order box goods collection cache module further comprises a maintenance device, the maintenance device corresponds to the at least one modular cache unit and is configured to maintain the modular cache unit.

9. The material box storage and picking system according to claim 8, **characterized in that** the maintenance device further comprises a multi-layer maintenance platform.

10. The material box storage and picking system according to claim 1 or 2, **characterized in that** the order box goods collection cache module is configured to randomly receive and cache order boxes corresponding to multiple batches of orders and to output order boxes corresponding to a same batch of orders in a centralized manner as required.

11. The material box storage and picking system according to claim 1 or 2, **characterized in that** the material box storage module comprises at least one modular storage unit which includes at least one material box storage sub-unit, and the material box storage sub-unit comprises at least one set of material box storage shelves, at least one lifting machine, at least one shuttle vehicle and at least one power station.

12. The material box storage and picking system according to claim 11, **characterized in that** the set of material box storage shelves is an intensive multi-layer shuttle vehicle shelf, and each shelf layer has a plurality of goods locations.

13. The material box storage and picking system according to claim 11, **characterized in that** the modular storage unit further comprises a code scanner configured to scan code information on side surfaces of the material boxes to realize entry of information of the material boxes.

14. The material box storage and picking system according to any one of claims 1 to 13, **characterized in that** the batch-of-orders sorting module at least comprises a plurality of sorting units, a conveyor line and a transfer machine, the batch-of-orders sorting module is configured to perform parallel sorting of the batch of orders, and the conveyor line is connected to the material box storage module and the order box goods collection cache module.

15. The material box storage and picking system according to claim 14, **characterized in that** each of the sorting units comprises a plurality of sorting stations, each of the sorting stations at least comprises a man-machine operation device, a cache shelf, a conveyor line and a transfer machine, and the cache shelf comprises a shelf and the order boxes disposed on the shelf.

16. The material box storage and picking system according to any one of claims 1 to 15, **characterized in that** the order box allocation module at least comprises a conveyor line, a transfer machine, an allocation platform, a cache shelf and a man-machine operation device; and
the conveyor line is connected to the order box goods collection cache module, and the cache shelf comprises a shelf and user boxes disposed on the shelf.

17. The material box storage and picking system according to any one of claims 1 to 16, **characterized in that** the warehouse management module is configured to classify multiple orders in batches according to a preset classification rule, to calculate a quantity of a same type of to-be-sorted goods corresponding to the same batch of orders, to send a calculation result of the quantity and type of the to-be-sorted goods to the batch-of-orders sorting module and the material box storage module, to control the material box storage module to output material boxes according to a preset delivery rule, and to control the batch-of-orders sorting module to sort goods from the material boxes into the order boxes according to a preset sorting rule.

18. The material box storage and picking system according to any one of claims 1 to 17, **characterized in that** the warehouse management module is configured to control the order box goods collection cache module to output goods corresponding to the same batch of orders in a centralized manner according to a delivery rule by analyzing information of the order boxes stored on the shelves, after the order boxes are controlled to enter the order box goods collection cache module according to a preset storage rule.

19. A storage and allocation system, **characterized by** comprising the material box storage and picking system according to any one of claims 1-18, and a storage module, a whole-box delivery module and an empty box conveying module which are connected to the material box storage and picking system.

20. The storage and allocation system according to claim 19, **characterized in that** the storage module is connected to an external warehouse system or an external transporter, and the empty box conveying module is configured to supply empty boxes to the material box storage and picking system or to recycle empty boxes from the material box storage and picking system.
